# EUROPÄISCHE PATENTSCHRIFT

(11) **EP 0 710 581 B1**
(45) Veröffentlichungstag und Bekanntmachung des Hinweises auf die Patenterteilung: **11.08.1999**
(21) Anmeldenummer: 95117204.8
(22) Anmeldetag: 02.11.1995
(51) Int. Cl.: B60K 37/00

(54) **Einrichtung zur Vermeidung von störenden Reflexen auf Windschutzscheiben von Fahrzeugen**
Device for avoiding disturbing reflections on vehicle windscreens
Dispositif pour éviter les réflexions gênantes sur les pare-brises des véhicules

(30) Priorität: 02.11.1994 DE 4439062
(43) Veröffentlichungstag der Anmeldung: 08.05.1996
(73) Patentinhaber: Steffes, Klaus, 47279 Duisburg (DE)
(72) Erfinder: Steffes, Klaus, 47279 Duisburg (DE)

(56) Entgegenhaltungen:
- DE-A- 1 530 615
- US-A- 5 316 359
- PATENT ABSTRACTS OF JAPAN vol. 007 no. 031 (M-192) ,8.Februar 1983 & JP-A-57 186528 (LONSEAL KOGYO KK) 17.November 1982,
- RESEARCH DISCLOSURE , Bd. 2244, Nr. 364, August 1994 EMSWORTH, GB, Seite 404 XP 000468927 DISCLOSED ANONYMOUSLY 'INSTRUMENT CLUSTER WITH ANTI-GLARE SURFACE'
- PATENT ABSTRACTS OF JAPAN vol. 017 no. 679 (M-1527) ,14.Dezember 1993 & JP-A-05 229045 (SEKISUI PLASTICS CO LTD) 7.September 1993,

## Beschreibung

### Stand der Technik

Die Oberseiten von KFZ-Armaturentafeln bestehen meist aus dunklen, seidenmatten und gemusterten Kunststofflächen bzw. aus matt-schwarz lackierten Flächen. Trifft Licht, besonders Sonnenlicht auf diese Flächen, so wird ein Teil durch Absorbtion vermindert, ein anderer durch die Struktur der Oberflächen zur Seite reflektiert. Ein noch deutlich sichtbarer, nicht vermeidbarer Rest aber wird zur Windschutzscheibe reflektiert und durch die Schrägstellung dem Fahrzeugführer ins Sichtfeld gespiegelt.

### Problem

Der in Anspruch 1 angegebenen Erfindung liegt das Problem zugrunde, daß herkömmliche Maßnahmen störende Spiegelungen auf der schräggestellten Windschutzscheibe nicht ausreichend unterbinden können. Gemusterte matte bzw. seidenmatte Kurstoffflächen haben einen noch spürbaren Anteil an Flächen, die parallel oder annähernd parallel zur Hauptfläche liegen. Sie können damit Licht, um den durch Absorbtion und Streuung verringerten Anteil, reflektieren. Ein recht großer Anteil an Einzelflächen hat eine konvexe Form, an deren kugeliger bzw. zylinderförmiger Oberfläche durch nicht vermeidbaren Restglanz, punktuelle Spiegelungen entstehen, die durch Pflege der Hauptfläche, welche einen gewissen Poliereffekt bewirken kann, bzw. durch Pflegemittel, noch verstärkt werden. Der Poliereffekt bedeutet ebenfalls eine Zunahme der zur Hauptfläche parallel liegenden Einzelflächen durch Abtragung bzw. Einebnung.

Der Versuch, die Hauptfläche in überschaubar teilbare Einzelfächen aufzuteilen, die das Störlicht in unschädliche Richtungen ableiten, kann aus optischer wie auch reinigungstechnischer Sicht nicht befriedigen.

### Erfindung

Dieses Problem wird durch die Maßnahmen nach Anspruch 1 gelöst.

### Vorteilhafte Wirkung der Erfindung

Mit der Erfindung wird im Anwendungsfall, ohne wesentliche Störung des Gesamtbildes der Innenausstattung, erreicht, daß Lichtreflexe auf der Oberseite von Armaturentafeln durch einfallendes Licht von oben oder vorn, durch die besondere Struktur der florigen Oberfläche bedingt, fast völlig unterbunden werden. Mit beweglichen flächigen Körpern, die auf der Oberfläche velouriert sind, können bereits im Verkehr befindliche Fahrzeuge ausgerüstet werden.

### Weiterbildung der Erfindung

Vorteilhalte Ausgestaltung der Erfindung sind in den Ansprüchen 2 - 4 angegeben.

Die Weiterbildung nach Anspruch 2 ermöglicht, je nach Produktionsverfahren, die Verwendung von Florgeweben wie: Samt, Velour, Velvet usw.

Die Ausgestaltung nach Anspruch 3 dient der Möglichkeit, z. B. mit Hilfe tiefgezogener Kunststoffolie, den Konturen der Armaturentafel angepaßte, konfektionierte Reflexverminderer in bereits im Verkehr befindlichen Fahrzeugen einzusetzen. Die Befestigung kann dem Einzelfall, z. B durch. Kleber, Selbstkleber, Rutschhemmer usw. oder mechanisch, angepaßt werden.

Die Ausgestaltung nach Anspruch 4 geht von der Überlegung aus, daß der, aus Sicht des Fahrzeugführers unten liegende Bereich, also der Bereich mit Sieht auf die Fahrbahn oder Wasserfläche selbst, vor allem bei Sonnenlicht von vorn-oben, bedingt durch Reflektionsarmut der Umgebungsflächen, das virtuelle Bild (**11**) eines Head-up-displays wesentlich kontrastreicher erscheinen läßt. Die Befürchtung, daß die Überlagerung von Reflektion und virtuellem Bild eine optische Orientierung behindert, ist damit weniger begründet.

### Darstellung der Erfindung

Ein Ausführungsbeispiel der Erfindung wird anhand der **Fig**. 1 bis 3 erläutert. Es zeigen:
**Fig**. 1 die Oberfläche einer Armaturentafel eines Fahrzeugs mit aufgebrachter velourierter Reflexverminderungsschicht.
**Fig**. 2 die Wirkungsweise der Velourierung.
**Fig**. 3 die Schrägstellung der Velourierung.
**Fig**. 4 die Ansparung für Head-up-displays.

**Fig**. 1 zeigt eine Armaturentafel (**4**) aufderen Oberfläche die reflexvermindernde Fläche (**3**) aufgebracht ist. Der Lichtstrahl (**1**) durchdringt die Windschutzscheibe (**2**) trifft auf die velourierte Fläche (**3**) und wird durch Absorbtion und Streuung fast völlig eliminiert. Ein unbedeutender Rest des Lichtes (**5**) wird reflektiert und trifft durch Umlenkung an der Windschutzscheibe (**2**) das Auge des Betrachters (**6**).

**Fig**. 2 zeigt die Velourierung (**3**) als Schema. Die Einzelfasern haben einen Winkel α (**13**) von ca. 90° zur Grundfläche. Schräg von oben einfallendes Licht (**1**) wird an den zylindrischen Oberflächen der Fasern in gleichem, dem Einfallswinkel entsprechenden Winkel, unter Streuung und Absorbtion nach unten in den dunklen Befestigungsgrund, z. B. Kleberbett reflektiert (**7**). Das Grundgewebe selbst, bzw. der Kleber einer Beflockung, sind sinnvollerweise ebenfalls dunkel, so daß die Intensität von nach oben zurückreflektierendem Licht (**5**), ebenfalls durch Streuung und Absorbtion gemindert, kaum wahrnehmbar wird. Die an den sichtbaren Schnittflächen der Fasern auftretende Reflektion (**5**) ist nach dem Stand der Technik unvermeidbar, tritt aber durch das günstige Verhältnis von Schnittkantenflächen zur Gesamtfläche kaum in Erscheinung.

**Fig**. 3 zeigt, daß durch geschickte Schrägstellung der Velourierung mit dem Winkel α (**14**), die Reflexverminderung nicht wesentlich verändert wird. Bei direktem Blick (**6, 9**) schräg auf die Seiten der Fasern (**3**) erscheint die Velourierung, durch Reflektionen von Hintergrundlicht (**8**) an den zylindrischen Flächen heller, was dem Reflektionscharakter der schwarzen, genarbten und seidenmatten Kunststoffoberflächen heutiger Kraftfahrzeuge eher entspricht als der Blick von oben auf die tiefdunkel-mattschwarz erscheinende velourierte Oberfläche. Das gilt sinngemäß für farbige Flächen.

**Fig**. 4 zeigt eine, in eine Ausspanung eingesetzte Einrichtung für ein Head-up-display (**10**). Da das virtuelle Bild des Head-up-displays (**11**) im reflektionsberuhigten Bereich (**12**) liegt, ist es durch den großen Kontrast auch bei relativ geringer Leuchtdichte gut erkennbar, ohne Hindernisse vor dem Fahrzeug zu überstrahlen.

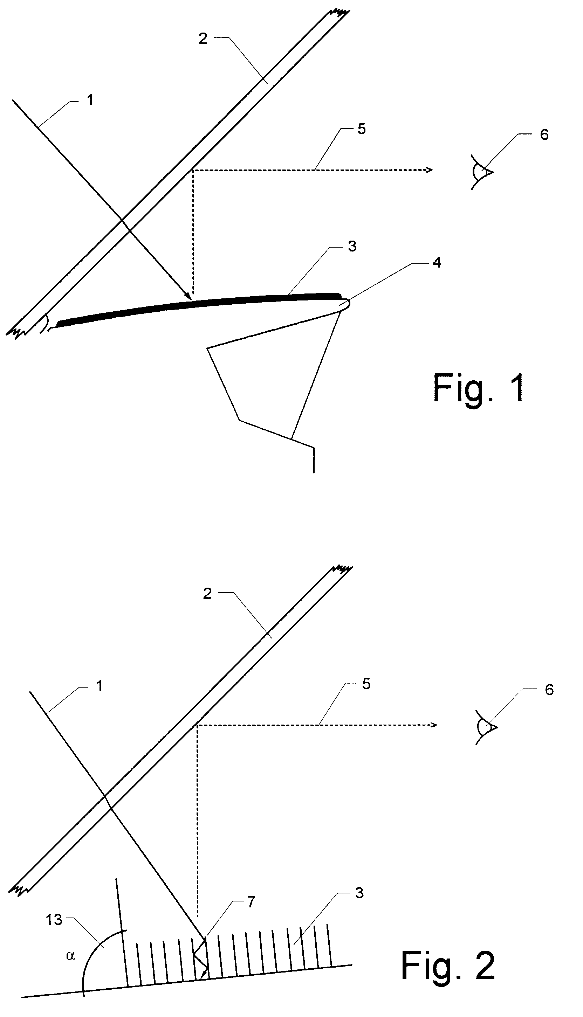

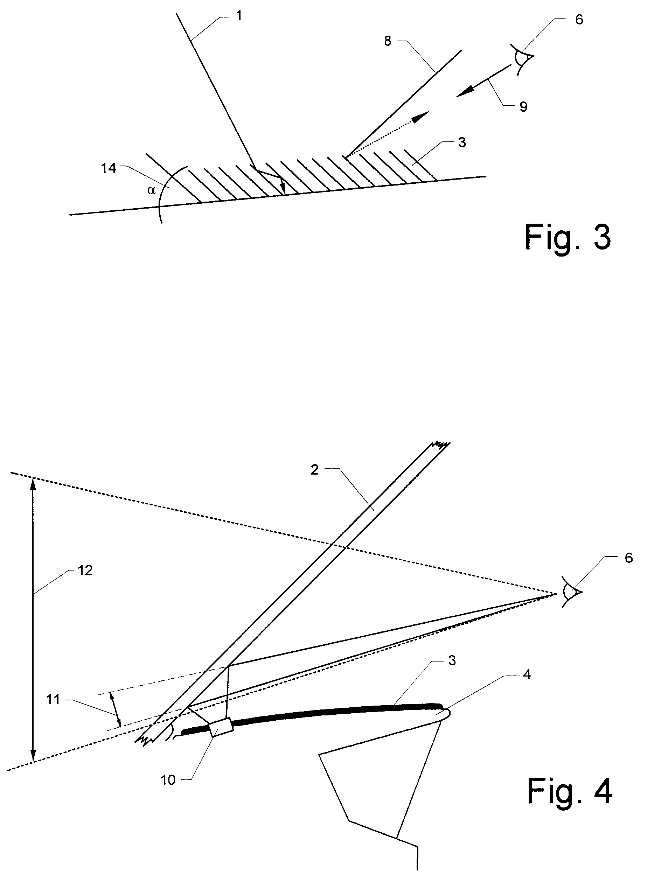

## Patentansprüche

1. Reflexvermindernde Fläche (3) für eine Armaturentafel (4) von Fahrzeugen, **dadurch gekennzeichnet**, daß die zur Windschutzscheibe (**2**) gerichtete Fläche (**3**) der Armaturentafel (**4**) in einer begrenzten Teilfläche oder in mehreren begrenzten Teilflächen, die an der Windschutzscheibe in für die Durchsicht wichtigen Bereichen reflektiert werden, so hergerichtet ist, daß darauf befestigte schwarze oder dunkelfarbige oder schwarze und farbig gemischte textile Fasern in einem Winkel von etwa 90° (**13**) zu ihr stehen oder in Fahrtrichtung geneigt (**14**) sind, wobei die aus ihrer Verankerung herausragende Länge der Fasern mindestens 0,2 mm und höchstens 15 mm beträgt.

2. Reflexvermindernde Fläche nach Anspruch 1 dadurch gekennzeichnet, daß die Fasern Teil eines Florgewebes sind.

3. Reflexvermindernde Fläche nach einem der Ansprüche 1 bis 2 dadurch gekennzeichnet, daß die reflexvermindernden Flächen auf beweglichen flächigen Körpern aufgebracht sind.

4. Reflexvermindernde Fläche nach einem der Ansprüche 1 bis 3 dadurch gekennzeichnet, daß in dem, aus Sicht des Fahrzeugführers unten erscheinenden Bereich der an der Windschutzscheibe reflektierten Fläche, ein oder mehrere Felder ausgespart sind, um Einrichtungen für Head-up-diplays unterzubringen.

## Claims

1. Reflection-reducing surface (3) for a motor vehicle dashboard (4) wherein the surface (3), which is directed towards the windscreen (2), of the dashboard (4) is arranged in such way in a restricted partial area or in several restricted partial areas, which are reflected in the windscreen in areas that are important for vision, that black or dark or black and multicoloured textile fibres, which are fastened onto it, are at an angle of approximately 90° (13) to it or are inclined in the driving direction (14), whereby the length of the fibres that projects from its anchorage is at least 0.2 mm and at most 15 mm.

2. Reflection-reducing surface according to claim 1 wherein the fibres are part of a pile fabric.

3. Reflection-reducing surface according to one of the claims 1 to 2 wherein the reflection-reducing surfaces are mounted to movable, planar elements

4. Reflection-reducing surface according to one of the claims 1 to 3 wherein one or several fields to accommodate fittings for head-up displays have been left out of the area - which appears to be at the bottom from the driver's view - of the surface reflected in the windscreen.

## Revendications

1. Surface antireflet (3) pour tableau de bord (4) de véhicule, caractérisée par le fait que la surface (3) du tableau de bord (4) dirigée vers le pare-brise (2) est disposée, dans une surface partielle limitée ou dans plusieurs surfaces partielles limitées, de telle sorte que des fibres textiles noires ou sombres ou un mélange de fibres noires et colorées fixés sur cette surface forment un angle d'environ 90° (13) par rapport à elle ou sont inclinés dans le sens de la marche (14) ; les surfaces partielles limitées sont réfléchies sur le pare-brise dans des zones importantes pour la visibilité ; la longueur des fibres hors ancrage est au minimum de 0,2 mm et au maximum de 15 mm.

2. Surface antireflet selon la recommandation 1 caractérisée par le fait que les fibres font partie d'un tissu velouté.

3. Surface antireflet selon la recommandation 1 ou la recommandation 2 caractérisée par le fait que les surfaces antireflet sont disposées sur des pièces plates mobiles.

4. Surface antireflet selon une des recommandations 1 à 3 caractérisée par le fait que, dans la partie inférieure - du point de vue du conducteur du véhicule - de la surface réfléchie sur le pare-brise, une ou plusieurs zones sont évidées pour la mise en place d'éléments pour collimateurs ("head-up displays").
